# EUROPÄISCHE PATENTSCHRIFT

(11) **EP 2 373 968 B1**
(45) Veröffentlichungstag und Bekanntmachung des Hinweises auf die Patenterteilung: **14.10.2015**
(21) Anmeldenummer: 09760850.9
(22) Anmeldetag: 25.11.2009
(51) Int. Cl.: G01M 1/04

(54) **WUCHTVORRICHTUNG MIT ZUSATZLAGER**
BALANCING DEVICE HAVING ADDITIONAL BEARING
DISPOSITIF D'ÉQUILIBRAGE AVEC PALIER SUPPLÉMENTAIRE

(30) Priorität: 15.12.2008 DE 102008062255
(43) Veröffentlichungstag der Anmeldung: 12.10.2011
(73) Patentinhaber: Franz Haimer Maschinenbau KG, 86568 Hollenbach-Igenhausen (DE)
(72) Erfinder: HAIMER, Franz, 86568 Hollenbach (DE)
(74) Vertreter: Misselhorn, Hein-Martin
(86) Internationale Anmeldenummer: PCT/EP2009/065818
(87) Internationale Veröffentlichungsnummer: WO 2010/072502

(56) Entgegenhaltungen:
- WO-A1-2004/011896
- DE-A1- 10 103 305
- GB-A- 195 968
- US-A- 3 832 905

## Beschreibung

Die Erfindung betrifft eine Vorrichtung zum Messen der Rotationsunwucht eines Gegenstands, beispielsweise eines Maschinenelements oder eines Werkzeughalters.

Die Spindeln moderner rotierender Werkzeugmaschinen, beispielsweise Bohr- oder Fräsmaschinen, arbeiten nicht selten mit sehr hohen Drehzahlen von 20.000 U/min. und darüber. Bei diesen Drehzahlen treten bereits bei geringer Unwucht hohe Fliehkräfte auf. Diese belasten nicht nur die Spindellager der Werkzeugmaschine, sondern sie verkürzen auch die Standzeit des Werkzeugs und verschlechtern ggf. auch das Bearbeitungsergebnis. Der Werkzeughalter (mit oder ohne eingespanntem Werkzeug) wird deshalb vor dem Einsatz in der Werkzeugmaschine auf Auswuchtmaschinen ausgewuchtet. Einen typischen Vertreter einer solchen Auswuchtmaschine beschreibt die Patentanmeldung WO 00/45983.

Zentraler Bestandteil von Auswuchtmaschinen des aus der WO 00/45983 bekannten Typs ist die Spindel, an der das auszuwuchtende Bauteil befestigt wird und die das auszuwuchtende Bauteil dann auf Auswuchtdrehzahl bringt. Die Spindel läuft in einem Spindelhalter und bildet zusammen mit diesem die sogenannte Spindeleinheit. Bei modernen Auswuchtmaschinen wird die Unwucht direkt an der Spindeleinheit bestimmt - die an der Spindeleinheit in einer bestimmten Richtung auftretenden Momentankräfte werden durch einen geeigneten Sensor erfasst und stellen ein Maß für den Betrag und die Lage der Unwucht dar.

Um in Abhängigkeit von der jeweiligen Unwucht das entsprechende Messsignal erzeugen zu können, ist die Spindeleinheit bei derartigen Auswuchtmaschinen an einem speziellen Schwinglager aufgehängt. Dieses Schwinglager besteht bei der nachfolgend stellvertretend beschriebenen Konstruktion der WO 00/45983 aus zwei Blattfedern in Gestalt eines dünnen Blättchens aus Federstahl.

Jede dieser Blattfedern ist mit ihrer einen Seite am Maschinengestell befestigt und mit ihrer anderen Seite am Außenumfang der Spindeleinheit. Die beiden Blattfedern liegen dabei voneinander beabstandet in einer vertikalen, sich radial zur Spindelrotationsachse erstreckenden Ebene. Sie widerstehen in dieser Ebene angreifenden Zug-, Druck und Schubkräften, verhalten sich jedoch gegenüber Kraftkomponenten, die senkrecht zu dieser Ebene angreifen, im Wesentlichen biegeweich. Die obere der beiden Blattfedern wird (in besagter Vertikalebene) in horizontaler Richtung auf Zug und in vertikaler Richtung auf Schub belastet, während die untere Blattfeder in horizontaler Richtung auf Druck und in vertikaler Richtung auf Schub belastet wird. Auf diese Art und Weise wird die Spindeleinheit elastisch-auskragend gehalten, so dass diejenigen unwuchtbedingten Bewegungen der Spindeleinheit entstehen und erfasst werden können, die Rückschlüsse auf die Lage und Größe der Unwucht zulassen.

Wie die Figur 3 der WO 00/45983 zeigt, wird die Spindeleinheit durch die umlaufende Unwuchtkraft im Wesentlichen zu einer horizontal gerichteten Pendelbewegung um das auf zwölf Uhr liegende Schwinglager angeregt, wobei die Pendelbewegung nur eine sehr kleine Amplitude aufweist, die durch die Blattfedern praktisch nicht behindert wird. Hierdurch wird der auf fünfzehn Uhr liegende, fingerartig aus dem Maschinensockel herausragende Kraftsensor betätigt. Gleichwohl verhalten sich die beiden Blattfedern in vertikaler Richtung derart steif, dass die Spindeleinheit unter dem Einfluss der unwuchtbedingten Kräfte keine bzw. keine relevanten Bewegungen in vertikaler Richtung ausführt und unter dem Einfluss eines die Nennlast nicht überschreitenden Prüflings auch nicht bzw. nicht in relevanter Weise in vertikaler Richtung nachgibt.

Im Prinzip die gleiche Konstruktion ist aus der US 3 832 905 A bekannt.

Bei den bekannten Konstruktionen und insbesondere auch bei Konstruktionen, die jenem Konstruktions- bzw. Aufhängungsprinzip folgen, das aus der WO 00/45983 bekannt ist, stellt sich das Problem, dass die Lagerung der Spindeleinheit stoß- und überlastungsanfällig ist, d. h. beim unvorsichtigen Einsetzen eines Prüflings oder durch das Einsetzen eines zu schweren Prüflings Schaden nehmen kann bzw. zumindest eine nachteilige Beeinflussung erfährt.

Es ist Aufgabe der Erfindung, dieses Problem zu lösen und eine robustere Vorrichtung anzugeben, eine Vorrichtung, die im Einzelfall auch mit schwereren Prüflingen zurechtkommt.

Die Lösung dieser Aufgabe erfolgt mit den Merkmalen des Anspruchs 1.

Dementsprechend ist eine Spindeleinheit mit einer Spindel für den Prüfling vorgesehen, die mittels einer Halteraufhängung pendelnd an der Maschinenbasis verankert ist. Vorzugsweise ist hierzu lokal, an einer Stelle am Umfang der Spindeleinheit, ein Lager vorgesehen, das eine Schwenkbewegung in einer Raumrichtung gestattet. Dieses Lager wird in vielen Fällen zugleich eine definierte Ruheposition der Spindeleinheit relativ zur Maschinenbasis vorgeben. Es gestattet jedenfalls, dass die Spindeleinheit durch die im Messbetrieb auftretenden Unwuchtkräfte in einer vorgegebenen Messrichtung schwingt, was sensorisch erfasst wird. Um die Einwirkung von unerwünschten Querkräften auf die Sensoren weiter zu vermindern, ist zur Abstützung der Spindeleinheit mindestens ein Zusatzlager vorgesehen. Dieses kann, von vernachlässigbaren Reibungskräften abgesehen, im Wesentlichen ausschließlich Kräfte in Richtung einer Normalen zur Messrichtung übertragen. Das Zusatzlager entlastet besagte pendelnde Verankerung bzw. das entsprechende Lager in wesentlichem Umfang bzw. vollständig von gewichtsbedingten Kräften und beeinträchtigt dabei mit seinen unvermeidlichen Reibungskräften und Bewegungseinschränkungen die Messgenauigkeit nur in überraschend geringem Umfang.

Festzuhalten ist, dass die erfindungsgemäße Unwuchtmessvorrichtung nicht zwingend eine "Stand-Alone-Maschine" sein muss, sondern auch Bestandteil einer Mehrzweckmaschine sein kann, etwa eines das Werkzeug in einen Werkzeughalter einschrumpfenden Schrumpfgeräts, wie es beispielsweise in WO 01/89758 A1 beschrieben ist. Auch die Verbindung der Unwuchtmessvorrichtung mit einem die Bezugslänge eines in einen Werkzeughalter eingespannten Werkzeugs ermittelnden Voreinstellgeräts ist vorteilhaft. Schließlich kann die Unwuchtmessvorrichtung auch Bestandteil der Werkzeugmaschine selbst sein.

Im Rahmen einer bevorzugten Ausführungsform ist vorgesehen, dass das Zusatzlager nur einen einzigen Wälzkörper umfasst. Es erfüllt auf diese Art und Weise seine Aufgabe, die gewichtsbedingten Belastungen abzuleiten, lässt der Spindelanordnung aber einen großen Teil ihrer Freiheitsgrade und beeinträchtigt daher nicht die Schwingungen, die zur Bestimmung der Unwucht gemessen werden sollen.

Eine besonders günstige Ausführungsform ergibt sich, wenn der einzige oder die mehreren Wälzkörper in der Halteraufhängung zwischen den Halterelementen angeordnet sind, so dass sich die Halterelemente in einer Richtung senkrecht zur Messrichtung gegeneinander abstützen und die beiden Halterelemente im Betrieb über den Wälzkörper in Messrichtung gegeneinander abrollen können. Im Falle einer solchen Gestaltung bilden das Pendellager und das Zusatzlager eine Einheit, in die vorzugsweise auch noch der oder die Sensoren und eventuelle Federelemente zur Vorspannung integriert sind. Hierdurch wird Bauraum eingespart und es wird eine im Falle eines Defektes leicht auswechselbare, alle lagerseitig und sensorseitig denkbaren Störungen behebende Austauscheinheit geschaffen.

Im Rahmen einer anderen bevorzugten Ausführungsform ist vorgesehen, dass ein weiteres Zusatzlager in Form eines Gegenlagers eingebaut wird, das dem ersten Zusatzlager, welches in der Halteraufhängung untergebracht ist, am Umfang der Spindeleinheit im Wesentlichen diametral gegenüber liegt. Das Gegenlager umfasst mindestens einen, vorzugsweise nur einen weiteren Wälzkörper. Hierdurch wird eine noch bessere Abstützung realisiert, ohne dass die Beweglichkeit der Spindeleinheit in Messrichtung, auch im Hinblick auf eventuelle Taumelbewegungen der Spindeleinheit, spürbar weiter eingeschränkt würde.

Dies gilt jedenfalls dann, wenn, wie ebenfalls bevorzugt vorgesehen, zwei beabstandet voneinander angebrachte Sensoren eingebaut werden und das oder die Zusatzlager, in Richtung der Spindeldrehachse gesehen, im Wesentlichen mittig zwischen den beiden Sensoren eingebaut wird bzw. werden, wobei jede der beiden letztgenannten Maßnahmen auch für sich alleine gesehen sinnvoll ist.

Weitere Vorteile und Wirkungsweisen der Erfindung machen die nachfolgend anhand verschiedener Figuren, deren zeichnerischer Offenbarungsgehalt erfindungswesentlich ist, erläuterten Ausführungsbeispiele erkennbar.

Es zeigen:
Fig. 1 einen Axiallängsschnitt durch ein erfindungsgemäßes erstes Ausführungsbeispiel einer Auswuchtmaschine für Werkzeughalter, gesehen entlang einer Linie 1 - 1 in Fig. 2, wobei allerdings in Fig. 1 das eine erfindungsgemäße Zusatzlager, mit welchem dieses Ausführungsbeispiel ausgerüstet ist, hinter der Zeichenebene liegt und daher verdeckt ist;
Fig. 2 einen Axialquerschnitt durch das erste Ausführungsbeispiel der Auswuchtmaschine, gesehen entlang einer Linie II - II in Fig. 1, wobei hier allerdings das erfindungsgemäße Zusatzlager unterhalb der Zeichenebene liegt und daher verdeckt ist;
Fig. 3 eine perspektivische Seitenansicht des ersten Ausführungsbeispiels der Auswuchtmaschine, welche einen Blick auf das eine erfindungsgemäße Zusatzlager gewährt, das zwischen den beiden Halterelementen der Halteaufhängung der Spindeleinheit angeordnet ist;
Fig. 4 eine perspektivische Seitenansicht eines zweiten Ausführungsbeispiels der Auswuchtmaschine, welche einen Blick auf das erste erfindungsgemäße Zusatzlager gewährt, das zwischen den beiden Halterelementen der Halteaufhängung der Spindeleinheit angeordnet ist, und einen Blick auf das der Halteraufhängung diametral gegenüberliegend angeordnete zweite Zusatzlager;
Fig. 5 einen Axiallängsschnitt durch das zweite Ausführungsbeispiel einer Auswuchtmaschine;
Fig. 6 eine perspektivische Seitenansicht eines dritten Ausführungsbeispiels der Auswuchtmaschine, welches sich dadurch auszeichnet, dass die Auswuchtmaschine mit vier im Abstand von 90 Grad über den Umfang der Spindeleinheit angeordneten Zusatzlagern ausgerüstet ist;
Fig. 7 eine Draufsicht auf das von Fig. 6 gezeigte dritte Ausführungsbeispiel der Auswuchtmaschine;
Fig. 8 eine Seitenansicht eines vierten Ausführungsbeispiels der Auswuchtmaschine, welches sich dadurch auszeichnet, dass die Auswuchtmaschine mit einem den Umfang der Spindeleinheit weitgehend umgreifenden Lagerkranz ausgerüstet ist;
Fig. 9 einen Axialquerschnitt durch das vierte Ausführungsbeispiel der Auswuchtmaschine in Fig. 7;
Fig. 10 eine schematische Seitenansicht der Spindeleinheit;
Fig. 11 den Lagerkäfig des Kugelrings in Detaildarstellung.

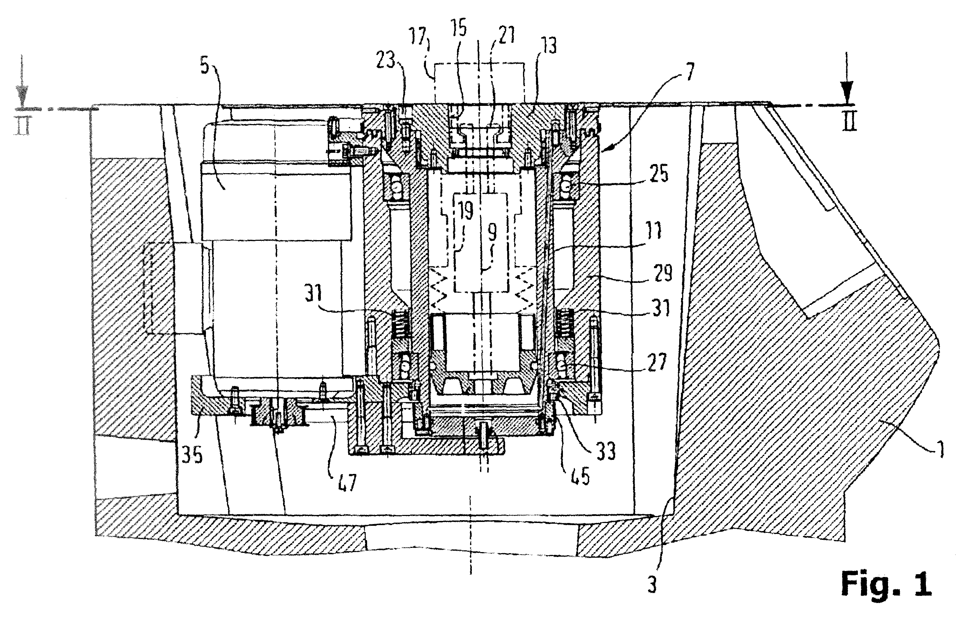

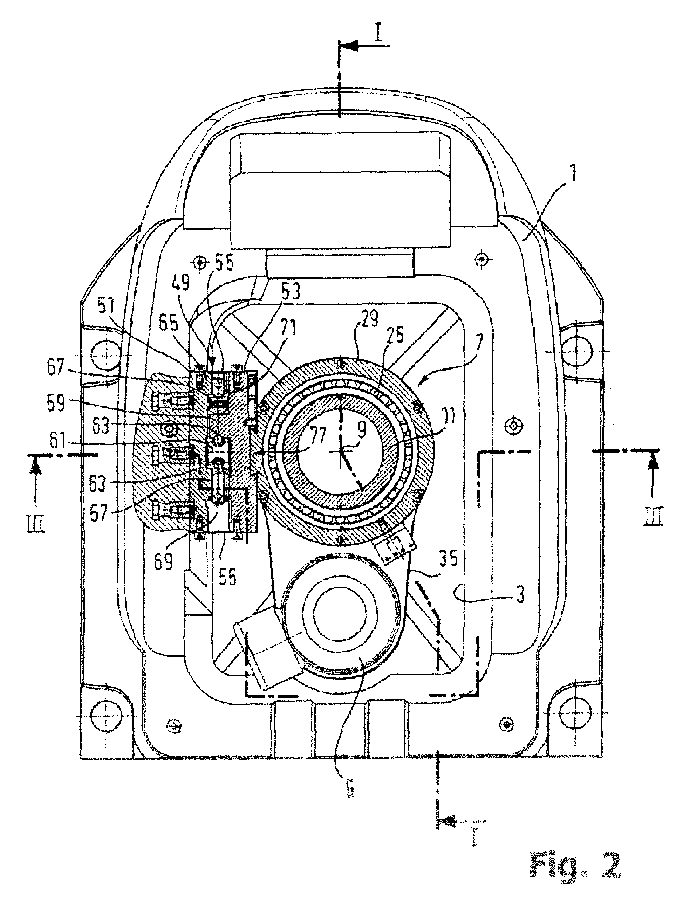

Die in den Fig. 1 und 2 in Gesamtansicht dargestellte Auswuchtmaschine hat ein als Maschinenbasis dienendes Gehäuse 1. Um die Auswuchtmaschine unempfindlich gegen Vibrationen zu machen und ihr eine optimale Standsicherheit zu verleihen, ist das Gehäuse 1 aus einem schweren Material gefertigt, beispielsweise aus Beton oder dergleichen. Das Gehäuse beherbergt in einer von oben zugänglichen Kammer 3 eine von einem Elektromotor 5 angetriebene Spindeleinheit 7. Die Spindeleinheit 7 besitzt eine rotierende Spindel 11, deren Drehachse 9 vorzugsweise vertikal angeordnet ist - durch die vertikale Orientierung der Spindel wird vermieden, dass das Messergebnis in irgendeiner Form durch die Gewichtskraft beeinflusst wird.

Die Spindel weist an ihrem oberen Ende einen betriebsmäßig auswechselbaren Kupplungsadapter 13 mit einer zur Drehachse 9 zentrischen Aufnahmeöffnung auf. Diese dient zum Anschluss eines auszuwuchtenden, genormten, bei 17 angedeuteten Prüflings. Bei dem Prüfling kann es sich um einen Werkzeughalter, z. B. in herkömmlicher Steilkegel-Ausführung, oder um einen Hohlschaftkegel-Halter (HSK-Halter)oder auch um einen anderen Rotor handeln. Die Spindel 11 ist als Hohlspindel ausgebildet. Sie enthält eine Betätigungseinrichtung 19, die mit Hilfe einer Spannzange 21 den Werkzeughalter 17 während der Unwuchtmessung in dem Kupplungsadapter 13 hält. Der Kupplungsadapter 13 ist mit Schrauben 23 an der Spindel 11 befestigt und austauschbar, kann also an den Typ des zu vermessenden Werkzeughalters angepasst werden.

Die Spindel 11 ist mit zwei in axialem Abstand voneinander angeordneten Kugellagern 25, 27 in einem rohrzylindrischen Spindelhalter 29 spielfrei gelagert, wobei axiales Lagerspiel durch Vorspannfedern 31 sowie eine die Spindel 11 umschließende Federmutter 33 ausgeglichen wird.

Der Elektromotor 5 ist achsparallel zur Drehachse 9 neben der Spindeleinheit 7 angeordnet und zusammen mit dem Spindelhalter 29 auf derselben Seite des Verbindungsjochs 35 angeflanscht. Ein Endlosriemen-Antrieb 47 stellt die Antriebsverbindung zwischen dem Elektromotor 5 und der Spindel 11 her, bzw. zwischen deren Riemenscheiben.

Die Winkelbestimmung des zu messenden Unwuchtvektors erfolgt bei diesem Ausführungsbeispiel unmittelbar an der Spindel 11 und nicht wie bei herkömmlichen Unwuchtmessvorrichtungen am Elektromotor - ohne dass allerdings die Erfindung hierauf beschränkt wäre.

Die bei diesem Ausführungsbeispiel aus dem Elektromotor 5 und der Spindeleinheit 7 bestehende Baugruppe ist mittels einer lösbar am Spindelhalter 29 befestigten Halteraufhängung 49 am Gehäuse bzw. der Maschinenbasis 1 gehalten. Die Halteraufhängung 49 umfasst zwei bei diesem Ausführungsbeispiel im Wesentlichen plattenförmige Halterelemente 51, 53. Das erste Halterelement 53 ist relativ zum Spindelelement 7 festgelegt - im vorliegenden Fall dadurch, dass es am Spindelhalter 29 befestigt ist, gegebenenfalls auch unter Verwendung eines Zwischenstücks. Das zweite Halterelement 51 ist relativ zur Maschinenbasis 1 festgelegt, wobei es ebenfalls nicht darauf ankommt, ob dieses Haltelement unmittelbar an der Maschinenbasis befestigt ist oder an einem seinerseits dort entsprechend befestigten Zwischenstück.

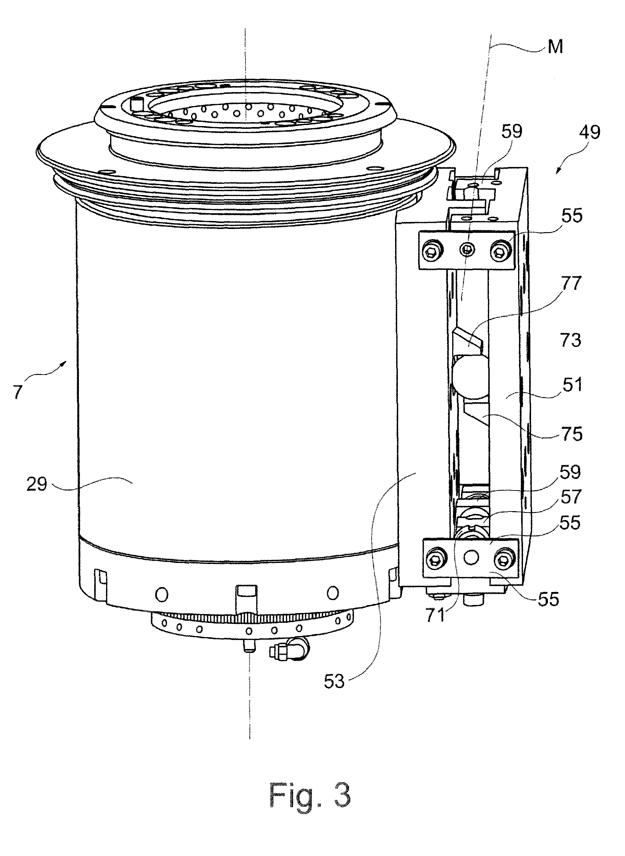

Wie man insbesondere an den Fig. 2 und 3 erkennen kann, sind die beiden Halterelemente 51, 53 über mehrere Abstandhalter - hier in Form der Blattfederelemente 55 - in einem vorbestimmten Abstand aneinander befestigt. Im vorliegenden Fall kommen insgesamt vier Blattfederelemente zum Einsatz. Zwei der Blattfederelemente liegen unter- bzw. übereinander auf der einen Seite der beiden Halterelemente und sind in einer gemeinsamen, zur Drehachse 9 parallelen Ebene angeordnet, vgl. insbesondere Fig. 3. Diese Ebene wird nachfolgend als Hauptebene der Blattfederelemente bezeichnet. Zwei weitere Blattfederelemente liegen, entsprechend angeordnet, auf der gegenüberliegenden Seite der Halterelemente, in einer weiteren Hauptebene.

Die Blattfederelemente 55 sind gegenüber Kraftkomponenten, die in Richtung ihrer Hauptebene an ihnen angreifen, im Wesentlichen biegesteif. Jenen Kraftkomponenten hingegen, die normal zu ihrer Hauptebene an ihnen angreifen, setzen die Blattfederelemente nur einen vernachlässigbaren Biegewiderstand entgegen.

Die Halterelemente 51, 53 werden dadurch in einem im Wesentlichen gleichbleibendem Abstand aneinander gehalten, können sich jedoch unter dem Einfluss der unwuchtbedingten Kräfte in einer Richtung, die im Wesentlichen der Normalen auf die Hauptebene der Blattfedern entspricht, gegeneinander verschieben - diese Richtung wird im Weiteren auch als Messrichtung bezeichnet. Dabei ist genau genommen auch eine gewisse, wenn auch nur kleine Verdrehbewegung der Halterelemente relativ zueinander möglich. Eine solche kann beispielsweise dadurch zustande kommen, dass die beiden im unteren Bereich liegenden Blattfedern momentan stärker ausgelenkt werden als die beiden oberen Blattfedern.

Generell ist festzuhalten, dass die Bewegungen, die die jeweilige Unwucht an der Spindeleinheit induziert, klein sind. Typischerweise liegen diese Bewegungen bei Werkzeugen, die für Betriebsdrehzahlen von 20.000 U/min oder mehr vorgesehen sind, im Bereich von +/- weniger hundertstel Millimeter bis hin zu einigen zehntel Millimetern.

Diese Verschiebung der Halterelemente 51, 53 wird so gemessen, dass man ein Signal erhält, aus dem sich eine Aussage über den Betrag und die Lage der Unwucht treffen lässt. Zu diesem Zweck liegen in Messrichtung zwischen den Halterelementen mehrere, vorzugsweise zwei Sensoren. Da nur sehr kleine Bewegungen zu detektieren sind, werden Kraftaufnehmer verwendet, meist solche piezoelektronischer Bauart. Sensoren, die die relative Momentangeschwindigkeit und/oder -beschleunigung der Halterelemente zueinander aufnehmen, sind denkbar, bleiben aber bei derart kleinen Bewegungen eher ein Theoretikum.

Wie man anhand der Fig. 2 und 3 sieht, liegt einer der Sensoren nahe des oberen Endes der Spindeleinheit 7 zwischen den Halterelementen 51, 53, während der andere der beiden Sensoren nahe des unteren Endes der Spindeleinheit 7 zwischen den Halterelementen 51, 53 liegt. Eine solche Sensoranordnung gestattet es, längs der Drehachse ungleichmäßig verteilte und damit zu Taumelbewegungen der Spindeldrehachse 9 führende Unwuchten messen zu können.

Wie insbesondere anhand der Fig. 2 zu erkennen ist, ist jedes der Halterelemente mit einem Vorsprung 57 bzw. 59 für jeden der Sensoren versehen. Zwischen je einem Paar aus diesen Vorsprüngen 57, 59 ist ein Sensor 61 angebracht, der die Kraft aufnimmt, die diese beiden Vorsprünge unter dem Einfluss der Unwucht aufeinander ausüben.

Wie in Fig. 2 zu erkennen ist, liegen die Kraftsensoren 61 über Auflagekugeln 63 an den ihnen zugeordneten Vorsprüngen 57, 59 an, um den Einfluss eventueller Querkräfte, die das Messergebnis verfälschen können, so weit wie möglich von den Sensoren fernzuhalten. Nähere Einzelheiten zur Anbringung der Sensoren an den Halterelementen und der Verspannung der Halterelemente gegeneinander werden später noch beschrieben.

Trotz der besagten Auflagekugeln 63 muss allerdings das Auftreten von Querkräften an den Sensoren 61 möglichst vermieden werden; es muss also verhindert werden, dass sich die plattenförmigen Halterelemente 51, 53 quer, d. h. in Richtung einer Normalen N zur Messrichtung M (also im vorliegenden Fall in vertikaler Richtung) relativ zueinander bewegen, auch wenn nur mit kleiner Amplitude. Dies kann z. B. dann geschehen, wenn ein Prüfling mit großem Gewicht in die Spindeleinheit eingesetzt oder sogar fallen gelassen wird. Im Extremfall kann es hierbei zu Beschädigungen an der Halteraufhängung 49 kommen.

Um dies zu verhindern, ist erfindungsgemäß im Spalt zwischen den beiden Halterelementen ein Zusatzlager 73, 75, 77 vorgesehen. Dieses umfasst eine Lagerkugel 73, über die sich das der Spindeleinheit 7 zugeordnete Halterelement 53 an dem der Maschinenbasis zugeordneten Halterelement 51 abstützt, vgl. Figur 3. Zu diesem Zweck ist das der Spindeleinheit zugeordnete Halterelement 53 mit einem in den Spalt hinein auskragenden Auflager 77 versehen, mittels dessen es von oben auf die Lagerkugel 73 drückt. Die Lagerkugel liegt ihrerseits auf einem in den Spalt hinein auskragenden Basislager 75 des anderen Halterelements 51 auf.

Über diese Lagerkugel 73 können die beiden Halterelemente 51, 53 in Messrichtung ungehindert gegeneinander abrollen. In einer Richtung senkrecht zur Messrichtung, hier nämlich in vertikaler Richtung, werden die beiden Halterelemente 51, 53 hingegen durch die Lagerkugel 73 und die Blattfederelemente 55 zu einer in sich nahezu starren Halteraufhängung 49 verbunden.

Das Zusatzlager bzw. die Lagerkugel 73 ist so angeordnet, dass sie sich im Wesentlichen auf halbem Weg zwischen dem oberen und dem unteren Sensor befindet. In Folge dieser Anordnung wird keiner der Sensoren in seiner Funktion durch das Zusatzlager behindert, auch wenn die Spindeleinheit unter dem Einfluss entsprechender Unwuchten eine Art minimaler Schwenkbewegung um die Lagerkugel 73 herum ausführt, bei der sich z. B. der obere Teil des Halterelements 53 in Messrichtung und der untere Teil des Halterelements in die entgegengesetzte Messrichtung bewegt.

Die Lagerkugel 73 wird gefangen gehalten, indem sie mit ihren beiden nicht im Kraftfluss liegenden Seiten jeweils mit dem erforderlichen Spiel in eine kleine Mulde eingreift, die zu diesem Zweck in jedem der Halterelemente nahe des Auflagers 77 bzw. nahe des Basislagers 75 vorgesehen ist. Einzelheiten hierzu werden später noch näher beschrieben.

Diese Lösung lässt sich sehr einfach und ohne nennenswerte Kosten realisieren. Lagerkugeln stehen standardmäßig zu geringen Kosten zur Verfügung. Auch die zusätzliche Ausrüstung der beiden ohnehin vorhandenen Halterelemente 51, 53 mit dem Basislager 75 und dem Auflager 77 fällt vom Aufwand her nicht ins Gewicht.

Ein entscheidender Vorteil ist dabei, dass die erfindungsgemäß gestaltete, die Lagerkugel zwischen den Halterplatten 51, 53 aufnehmende Halteraufhängung 49 eine in sich weitgehend geschlossene Baugruppe bildet, die nur wenige, definierte Schnittstellen zu umgebenden Bauteilen besitzt. Diese Baugruppe kann mit wenigen Handgriffen montiert werden, ohne dass Rücksicht auf irgendwelche weiteren Lager genommen werden muss. Schlagwortartig kann man hier von einer "Kartuschenlösung" reden.

Ihre Stärke spielt eine solche, in sich geschlossene Baugruppe vor allem auch dann aus, wenn die Wuchtmaschine vor Ort in Stand gesetzt werden muss. Denn insbesondere dann, wenn die beiden Halterelemente 51, 53 mit einer Schwalbenschwanzführung oder einer ähnlichen Indexierung versehen sind, die auch beim Wiedereinbau die genaue Position an der Spindeleinheit bzw. Maschinenbasis vorgibt, kann die Halteraufhängung 49 problemlos vor Ort ein- und ausgebaut bzw. ausgetauscht werden, ohne dass eine neue Justierung der Maschine erforderlich ist. Die die Störung der Maschine verursachenden Probleme mit den Blattfedern, dem Stützlager oder den Sensoren können dann zuverlässig und schnell durch Austausch der kompletten Halteraufhängung 49 beseitigt werden. Dabei besteht die Möglichkeit, die defekte Halteraufhängung im Werk wieder präzise in Stand zu setzen.

Ein weiterer Vorteil liegt darin, dass die Kontur der Flanschflächen der kartuschenartigen Halteraufhängung 49 nicht durch die im Spalt zwischen den Halterplatten 51, 53 untergebrachte Lagerkugel 73 beeinflusst wird. Aufgrund dieser Tatsache bietet es sich an, die erfindungsgemäße Halteraufhängung 49 auch zum Zwecke der Nachrüstung zu verwenden und im Austausch gegen bisherige, flanschseitig mit ihr identischen Halteraufhängungen einzusetzen.

Anzumerken ist, dass die Blattfedern 55 trotz des Zusatzlagers 73, 75, 77 im Regelfall nach wie vor starr an den beiden Halterplatten angebracht sein werden, um auch in vertikaler Richtung zusätzlichen Halt durch die Blattfedern sicherzustellen. Theoretisch wäre es allerdings denkbar, die Blattfedern nunmehr so an den Halterplatten anzulenken, dass sie in vertikaler Richtung gelenkig sind. Auf diese Art und Weise kann man bei Bedarf erreichen, dass sämtliche Vertikalkräfte über die Lagerkugel 73 abgeleitet werden.

Wie bereits oben angesprochen, weist die erfindungsgemäße Halteraufhängung 49 noch weitere zweckmäßige Merkmale auf, die gerade für eine "Kartuschenlösung" interessant sind und daher nun noch näher beschrieben werden sollen.

An einem der Halterelemente (z. B. am Halterelement 51, vgl. Fig. 2), ist zusätzlich zum Vorsprung 57 ein weiterer Vorsprung 65 vorgesehen, so dass der Vorsprung 59 des anderen Halterelements 53 zwischen diesen beiden Vorsprüngen 57 und 65 liegt. Zwischen den Vorsprüngen 65 und 59 ist ein elastisches Vorspannelement 67 eingespannt, welches für eine gewisse Vorspannung des Sensors 61 sorgt. In Messrichtung sich gegenüberliegende Einstellschrauben 69, 71 in den Vorsprüngen 57 bzw. 65 erlauben eine Positionsjustierung des Sensors 61 und eine Justierung der Vorspannkraft des Vorspannelements 67.

Jeder der beiden Sensoren 61 und das ihm zugeordnete federnde Vorspannelement stützen sich dadurch so an dem gegenüberliegenden Halterelement 53 ab, dass der Vorsprung 59 dieses Halterelements 53 die im Betrieb an ihm auftretenden Kräfte entweder über das Vorspannelement 67 oder über den Kraftsensor 61 auf das andere Halterelement 51 überträgt (sofern statt eines Kraftsensors ein Geschwindigkeits- oder -Beschleunigungssensor zum Einsatz kommt, ist dem Sensor ein weiteres Federelement parallel geschaltet, was hier nicht gezeigt ist). Auf diese Art und Weise ist sichergestellt, dass die Halterelemente stets unmittelbar miteinander gekoppelt sind und die Blattfederelemente 55 nicht belastet werden, d. h. in Messrichtung nicht wesentlich zur Kraftübertragung zwischen den Halterelementen herangezogen werden.

Zu erwähnen ist noch, dass die Blattfederelemente 55 paarweise den Kraftsensoren 61 zugeordnet sind und sich, ebenfalls paarweise, in Messrichtung gegenüberliegen. Im Übrigen sind auch die Vorspannelemente 67 zur Vermeidung von Querkräften zwischen Spitzen gelenkig gelagert, wie dies beispielsweise Fig. 2 zeigt.

Die am oberen und am unteren Ende der Spindeleinheit 7 im Abstand voneinander angeordneten Kraftsensoren 61 sind vorzugsweise gegensinnig an den beiden Halterelementen 51, 53 abgestützt. Wie Fig. 2 für den oberen Kraftsensor 61 zeigt, stützt sich dieser, bezogen auf die Drehachse 9, im Uhrzeigersinn gesehen an dem Vorsprung 59 des spindelseitigen Halterelements 53 und gegen den Uhrzeigersinn gesehen am Vorsprung 57 des gehäuseseitigen Halterelements 51 ab. Der untere Kraftsensor 61 hingegen ist im Uhrzeigersinn gesehen am gehäuseseitigen Halterelement 51 und gegen den Uhrzeigersinn gesehen am spindelseitigen Halterelement 53 abgestützt. Der Vorteil dieser Anordnungsweise ist, dass bei einer Kippbewegung der Spindel 11 beide Kraftsensoren 61 entweder gleichsinnig druckbelastet oder gleichsinnig druckentlastet werden. Infolgedessen spielen kraftrichtungsabhängige Kennlinienunterschiede der Kraftsensoren keine Rolle für das Messergebnis.

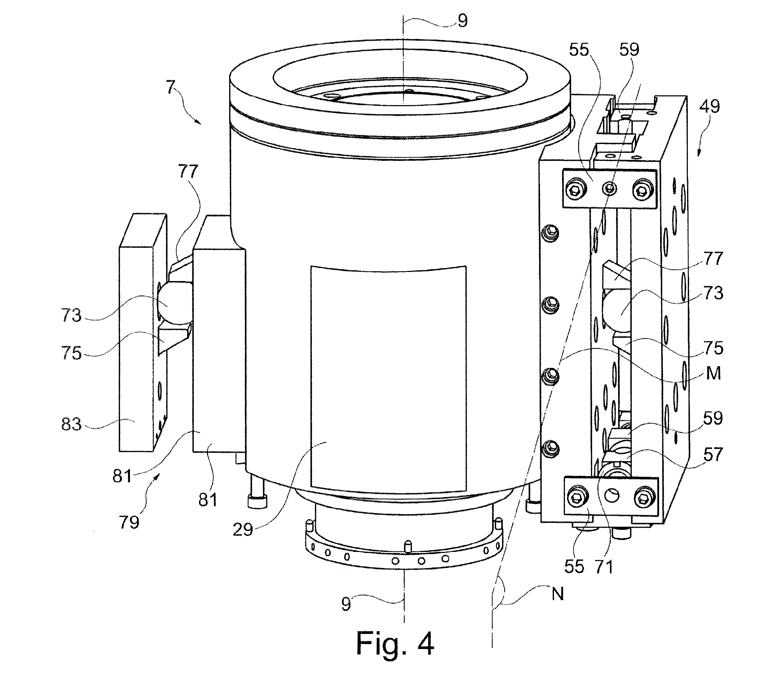

Die Figur 4 zeigt ein zweites Ausführungsbeispiel der Erfindung. Soweit nachfolgend nichts anderes gesagt wird, gilt, dass dieses zweite Ausführungsbeispiel dem ersten Ausführungsbeispiel entspricht und daher das oben Gesagte auch auf das zweite Ausführungsbeispiel zutrifft.

Der Unterschied bei diesem zweiten Ausführungsbeispiel der Erfindung ist der, dass zusätzlich zu der Halteraufhängung 49 mit dem integrierten Lager 73, 75, 77 ein weiteres Zusatzlager in Form eines Gegenlagers 79 zum Einsatz kommt, welches der Halteraufhängung 49 im Regelfall diametral gegenüberliegend angeordnet ist, und zwar ebenfalls in einer Höhe, die im Wesentlichen dem halben Weg zwischen dem oberen und dem unteren Sensor 61 entspricht. Zu diesem Zweck ist an der Spindeleinheit eine Gegenlagerplatte 81 angebracht, die über eine weitere Lagerkugel 73 auf eine dem Maschinengestell 1 zugeordnete Gegenlagerplatte 83 drückt und so verhindert, dass an der Spindeleinheit 7 ein Biegemoment entsteht, welches die Halteraufhängung 49 belastet. Im Bereich des Kugelsitzes sind die beiden Gegenlagerplatten 81, 83 im Prinzip genauso gestaltet wie die beiden Halterelemente 51, 53 an entsprechender Stelle.

Die Bauart dieses Ausführungsbeispiels ist besonders dann sehr günstig, wenn die Spindeleinheit 7 sehr schwer ist und/oder der Motor 5 und die Spindeleinheit 7 zu einer Baugruppe verblockt ausgeführt sind. Gerade bei dieser Ausführungsart ist es zudem möglich, die Blattfedern entweder sehr dünn und damit auch sehr nachgiebig auszuführen und/oder sie in vertikaler Richtung gelenkig an den Halterplatten anzuflanschen. Eine besonders dünne Ausführung der Blattfedern kommt der Ansprechgenauigkeit zugute.

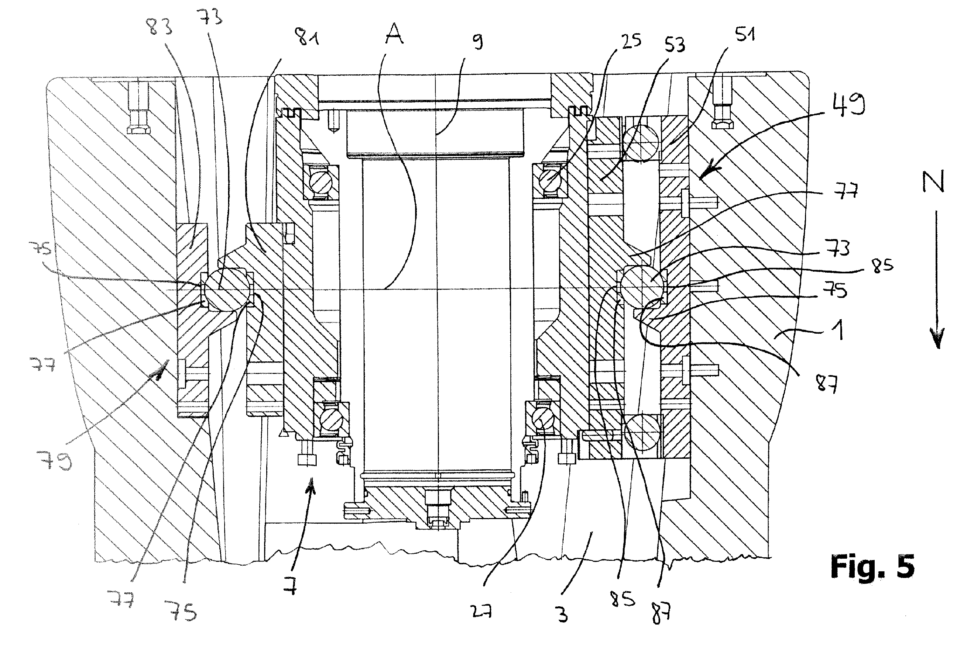

Die Figur 5 zeigt einen Achsschnitt durch das von Figur 4 gezeigte zweite Ausführungsbeispiel. In diesem Schnitt lässt sich gut erkennen, wie die Lagerkugeln 73 in ihrer bestimmungsgemäßen Position gehalten werden - sowohl an den beiden Halterplatten 51, 53 als auch an beiden Gegenlagerplatten 81, 83 sind jeweils Vertiefungen oder Bohrungen bzw. Mulden 85 vorgesehen, die die außerhalb des unmittelbaren Kraftflusses liegenden Flanken der Kugel 73 aufnehmen. Genauer gesagt nimmt jede Mulde 85 einen Kunststoffeinsatz 87 auf, der die ihm zugeordnete Flanke der Kugel 73 mit dem erforderlichen Spiel umgreift und so die Lagerkugel 73 hält, ohne ihr die erforderliche Beweglichkeit zu nehmen.

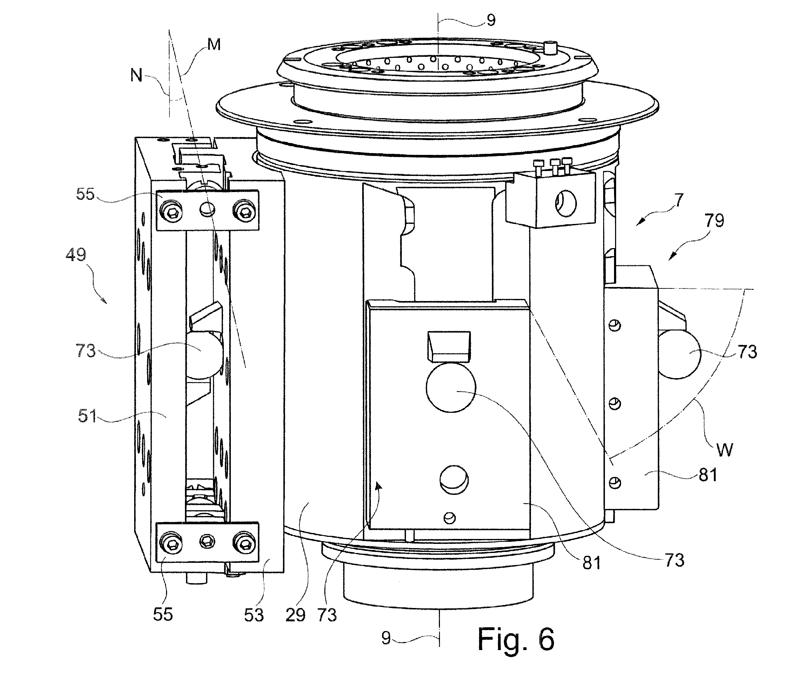

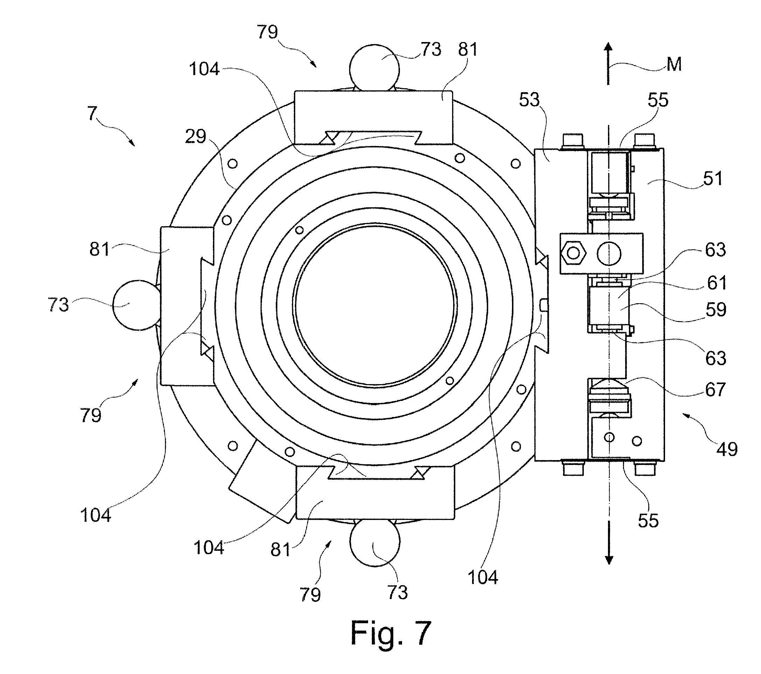

Die Figuren 6 und 7 zeigen ein drittes Ausführungsbeispiel der Erfindung. Soweit nachfolgend nichts anderes gesagt wird, gilt, dass dieses dritte Ausführungsbeispiel dem ersten bzw. zweiten Ausführungsbeispiel entspricht und daher das oben Gesagte auch auf das dritte Ausführungsbeispiel zutrifft.

Dieses dritte Ausführungsbeispiel unterscheidet sich von dem ersten und dem zweiten Ausführungsbeispiel dadurch, dass nicht nur ein einziges, sondern mehrere weitere Zusatzlager in Form von Gegenlagern 79 verwendet werden. Konkret werden hier insgesamt drei in Unfangsrichtung gesehen mit einem Versatz von (im Wesentlichen) jeweils 90 Grad eingebaute Gegenlager 79 verwendet, so wie das die Figur 7 zeigt. Jedes dieser Gegenlager 79 entspricht dem im Zusammenhang mit dem zweiten Ausführungsbeispiel beschriebenen Gegenlager, wodurch der Teileaufwand gering gehalten wird. Auf diese Art und Weise wird eine Vierpunktlagerung verwirklicht, die die Spindeleinheit senkrecht zur Messrichtung M (im konkreten Fall in vertikaler Richtung) sehr steif in Position hält, was vorteilhaft ist, wenn sehr schwere Prüflinge gewuchtet werden sollen, sich aber insoweit nachteilig auswirkt, als das Verkippen der Spindeleinheit behindert wird, wodurch es schwieriger wird, Aussagen über die Lage der Unwucht in Achsrichtung des Prüflings zu treffen.

Darüber hinaus kann man in Figur 7 recht gut erkennen, wie die Halteraufhängung 49 und die Gegenlager 79 jeweils mit Hilfe einer Schwalbenschwanzführung 104 an der Spindeleinheit 7 festgelegt sind und sich hierdurch, was ihre genaue Lage angeht, reproduzierbar von der Spindeleinheit 7 ab- und wieder anbauen lassen.

Anzumerken ist, dass bei allen bislang beschriebenen Ausführungsbeispielen gerade auch die Lagerkugeln 73 der Gegenlager 79 alternativ als Rollen anstatt als Kugeln ausgeführt werden können. Eventuelle Rollen sind dann so angeordnet, dass ein Abwälzen in Messrichtung M erfolgen kann, weshalb die Beweglichkeit der Spindeleinheit in Messrichtung nicht behindert wird.

Unter rein patentrechtlichen Gesichtspunkten ist an dieser Stelle festzuhalten, dass als Äquivalent zu einer Lagerung auf Rollen natürlich auch eine Lagerung auf Stäben denkbar wäre, die sich mit ihrer Längsachse parallel zur Spindeldrehachse erstrecken, die in Messrichtung biegeweich ausgeführt oder gelenkig angelenkt sind und so die Spindeleinheit (nur) in vertikaler Richtung abstützen, während Schwingungen in Messrichtung M möglich sind.

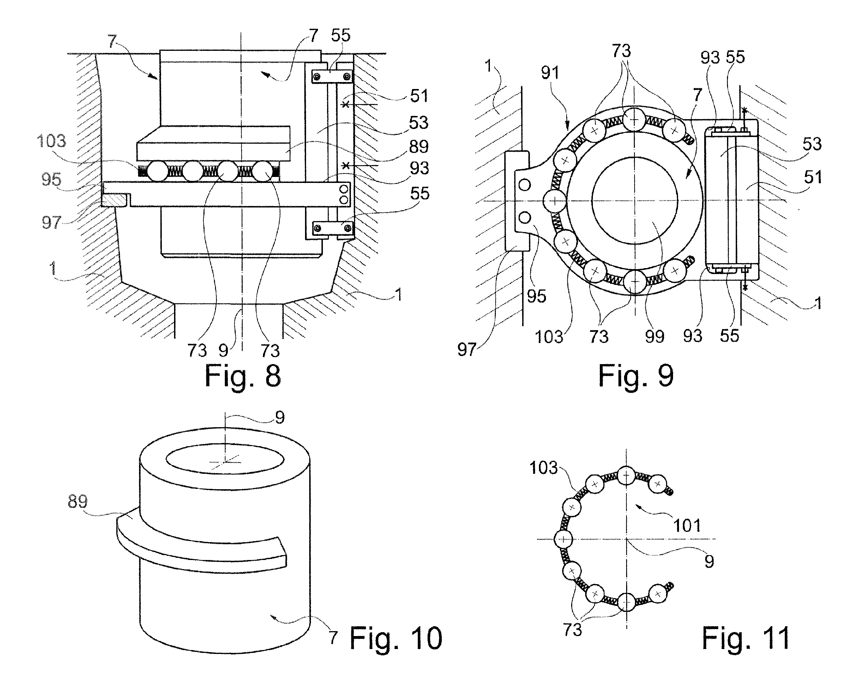

Die Figuren 8 bis 10 zeigen ein viertes, hochpräzises Ausführungsbeispiel der Erfindung.

Hier ist es so, dass die Spindeleinheit 7 nicht nur punktuell auf Wälzkörpern bzw. einer oder mehreren Kugeln 73 gelagert ist, sondern über einen guten Teil ihres Umfangs hinweg. Zu diesem Zweck ist die Spindeleinheit 7 bzw. deren Spindelhalter 49 mit einem Auflagerring 89 versehen. Funktional ist diesem Auflagerring 89 ein Gegenring zugeordnet, bei diesem Ausführungsbeispiel in Form der Brücke 91. Die Brücke 91 ist auf ihrer einen Seite mit einem Gabelabschnitt 93 versehen und auf ihrer anderen Seite mit einer Auflagezunge 95. Der Gabelabschnitt 93 übergreift die dem Maschinengestell 1 zugeordnete Halterplatte 53 und ist an dieser befestigt. Die Auflagezunge 95 liegt, ggf. unter Zwischenlage eines Lagerstücks 97, an dem Maschinengestell 1 an. Die Spindeleinheit 7 ist in die zentrale Öffnung 99 der Brücke 91 eingesetzt, durchgreift diese und stützt sich mit ihrem Auflagerring 89 über einen Kugelring 101 auf der Brücke 91 ab. Der Kugelring 101 besteht aus einer Anzahl von Lagerkugeln 73, die durch einen in üblicher Weise gestalteten Käfig 103 in Position gehalten werden.

Auf diese Art und Weise wird die Spindeleinheit 7 entlang ihres Umfangs über einen Bogen hinweg präzise abgestützt, der einen Winkel von 220° bis 270° aufspannt, was natürlich für ein Optimum an Präzision sorgt.

Gleichzeitig kann die beidseitig am Maschinengestell 1 befestigte Brücke 91 dazu eingesetzt werden, um das Maschinengestell 1 in sich zu stabilisieren. Dies wird in manchen Fällen den zusätzlichen Materialaufwand für die Brücke ein Stück weit kompensieren.

Der Vollständigkeit halber ist anzumerken, dass die Halteranordnung einschließlich der Sensoren bei diesem vierten Ausführungsbeispiel der Halteanordnung 49 des ersten Ausführungsbeispiels entsprechen kann. Eine die Spindeleinheit derartig weit umgreifende Lageranordnung mag es im Einzelfall erlauben, alternativ eine konventionelle Halteranordnung zum Einsatz zu bringen, das heißt eine Halteranordnung 49 ohne integriertes Zusatzlager bzw. Lagerkugel.

Es lässt sich zusammenfassend sagen, dass die geltend gemachte Erfindung insbesondere auch durch folgende Merkmale gekennzeichnet ist:
Die Sensoranordnung 61 besitzt zwei in Richtung der Drehachse 9 der Spindel 11 im Abstand voneinander angeordnete, zwischen den beiden Halterelementen 51, 53 gehaltene Sensoren 61, die bezogen auf eine zur Messeinrichtung senkrechte Axiallängsebene der Spindel 11 an den beiden Halterelementen 51, 53 vorzugsweise gespiegelt abgestützt sind.

Dabei ist die Vorrichtung vorzugsweise so konstruiert, dass das zumindest eine Zusatzlager 73, 75, 77, 79, 89, 91, 101 in Richtung entlang der Spindeldrehachse 9 gesehen im Wesentlichen mittig zwischen den beiden Sensoren 61 angeordnet ist. Weiterhin ist die Vorrichtung zweckmäßigerweise so gestaltet, dass jedem Kraftsensor 61 ein ihm in der vorbestimmten Kraftmessrichtung vorspannendes Federelement 67 zugeordnet ist.

Darüber hinaus ist die Vorrichtung vorzugsweise so angeordnet, dass ein Kraftsensor 61 und das ihm zugeordnete Federelement 67 in Serie zueinander an einem der beiden Halterelemente 51, 53 vorgespannt abgestützt sind und das andere Halterelement 51 im Kraftweg zwischen dem Kraftsensor 61 und dem Federelement 67 an einem Kraftsensor 61 abgestützt ist.

Eine andere bevorzugte Ausführungsform sieht vor, dass der Kraftsensor 61 und/oder Federelement 67 in der Kraftmessrichtung beiderseits zwischen Gelenklagern, insbesondere Kugeln oder Spitzen gehalten ist bzw. sind.

Eine andere vorzugsweise Ausgestaltung der Vorrichtung sieht vor, dass die Halteraufhängung 49 und/oder das Gegenlager 79 Vorrichtungen, insbesondere in Form einer Schwalbenschwanzführung, aufweisen, die die Position der Halteraufhängung 49 oder des Gegenlagers 79 an der Vorrichtung montageunabhängig festlegt.

Ein anderer Aspekt der Erfindung liegt in der Verwendung einer Halteraufhängung zum Nachrüsten in eine Vorrichtung zum Messen der Rotationsunwucht eines Prüflings umfassend eine Spindeleinheit 7, mit einer Spindel 11, die dazu bestimmt ist, den Prüfling 17 zu halten und mit Prüfdrehzahl rotieren zu lassen, sowie eine Halteraufhängung 49 mittels derer die Spindeleinheit 7 pendelnd an der Maschinenbasis 1 verankert ist, so dass die Spindeleinheit 7, durch die im Messbetrieb auftretenden Unwuchtkräfte in einer vorgegebenen Messrichtung M schwingen kann und eine Sensoranordnung 61, die bei Rotation der Spindel 11 mindestens eine in Messrichtung M auftretende Unwuchtkenngröße erfasst. Dabei ist die zu diesem Zweck verwendete Halteraufhängung derart ausgestaltet, dass mittels ihr eine Spindeleinheit 7 pendelnd an der Maschinenbasis 1 verankert werden kann, so, dass die Spindeleinheit 7 durch die im Messbetrieb auftretenden Unwuchtkräfte in einer vorgegebenen Messrichtung M schwingen kann und eine Sensoranordnung 61 betätigen kann, die bei Rotation der Spindel 11 mindestens eine in Messrichtung M auftretende Unwuchtkenngröße erfasst, wobei die Halteraufhängung 49 ein Zusatzlager 73, 75 zur Abstützung der Spindeleinheit 7 umfasst, dass ausschließlich Kräfte in Richtung einer Normalen N zur Messrichtung M übertragen kann.

### Bezugszeichenliste

- 1: Maschinenbasis
- 3: Kammer zur Aufnahme der Spindeleinheit
- 5: Elektromotor
- 7: Spindeleinheit
- 9: Drehachse der Spindel
- 11: Spindel
- 13: Kupplungsadapter
- 15: Aufnahmeöffnung für den auszuwuchtenden Gegenstand
- 17: Prüfling
- 19: Betätigungseinrichtung
- 21: Spannzange
- 23: Schrauben z. Befestigung des Kupplungsadapters a. d. Spindel
- 25: erstes Kugellager der Spindel
- 27: zweites Kugellager der Spindel
- 29: Spindelhalter
- 31: Vorspannfedern zum Eliminieren des Lagerspiels der Spindel
- 33: Federmutter
- 35: Verbindungsjoch zur Befestigung des Elektromotors
- 37: entfallen
- 39: entfallen
- 41: entfallen
- 43: entfallen
- 45: entfallen
- 47: Riementrieb
- 49: Halteraufhängung
- 51: erstes plattenförmiges Halterelement
- 53: zweites plattenförmiges Halterelement
- 55: Blattfeder bzw. Blattfederelement
- 57: Haltevorsprung für einen Sensor
- 59: Haltevorsprung für einen Sensor
- 61: Sensor
- 63: Auflagekugel z. Koppelung des Sensors an Haltevorsprung
- 65: weiterer Vorsprung zum Ankoppeln eines Vorspannelements 67
- 67: elastisches Vorspannelement
- 69: erste Einstellschraube
- 71: zweite Einstellschraube
- 73: Wälzkörper, hier in Form einer Lagerkugel
- 75: Basislager für den Wälzkörper
- 77: Auflager für den Wälzkörper
- 79: Gegenlager
- 81: spindelseitige Gegenlagerplatte
- 83: der Maschinenbasis zugeordnete Gegenlagerplatte
- 85: Mulde zum Halten der Lagerkugel
- 87: Kunststoffeinsatz
- 89: Auflagerring
- 91: Brücke
- 93: Gabelabschnitt
- 95: Auflagezunge
- 97: Lagerstück
- 99: zentrale Öffnung
- 101: Kugelring
- 103: Käfig
- 104: Schwalbenschwanzführung

- M: Messrichtung
- N: Normale zur Messrichtung
- W: Winkel am Umfang der Spindeleinheit
- A: Positionsachse der die Lagerkugeln haltenden Mulden

## Patentansprüche

1. Vorrichtung zum Messen der Rotationsunwucht eines Prüflings, umfassend
eine Spindeleinheit (7) mit einer Spindel (11), die dazu bestimmt ist, den Prüfling (17) zu halten und mit Prüfdrehzahl rotieren zu lassen, sowie eine Halteraufhängung (49), mittels derer die Spindeleinheit (7) pendelnd an der Maschinenbasis (1) verankert ist, so, dass die Spindeleinheit (7) durch die im Messbetrieb auftretenden Unwuchtkräfte in einer vorgegebenen Messrichtung (M) schwingen kann, und eine Sensoranordnung (61), die bei Rotation der Spindel (11) mindestens eine in Messrichtung (M) auftretende Unwuchtkenngröße erfasst, **dadurch gekennzeichnet, dass** die Spindeleinheit (7) durch mindestens ein Zusatzlager (73, 75, 77, 79, 89, 91, 101) abgestützt wird, das ausschließlich Kräfte in Richtung einer Normalen (N) zur Messrichtung (M) übertragen kann.

2. Vorrichtung nach Anspruch 1, **dadurch gekennzeichnet, dass** das Zusatzlager (73, 75, 77) nur einen einzelnen Wälzkörper (73) umfasst.

3. Vorrichtung nach Anspruch 1, **dadurch gekennzeichnet, dass** das Zusatzlager (73, 75, 77; 79) zwei einzelne Wälzkörper (73) umfasst, die sich in Bezug auf den Umfang der Spindeleinheit (7) im Wesentlichen diametral gegenüberliegen, oder vier einzelne Wälzkörper (73), die am Umfang der Spindeleinheit (7) zwischen sich jeweils einen Winkel (W) von 80 bis 100 Grad einschließen.

4. Vorrichtung nach Anspruch 2 oder 3, **dadurch gekennzeichnet, dass** der mindestens eine Wälzkörper (73) eine Kugel ist, die zwischen einer Vertiefung (85) auf der Seite der Spindeleinheit (7) und einer weiteren Vertiefung (85) auf der Seite der Maschinenbasis (1) derart gefangen ist, dass sich die Kugel (73) im Rahmen der unwuchtbedingten Auslenkung in Messrichtung (M) frei bewegen kann, ohne verloren zu gehen.

5. Vorrichtung nach Anspruch 4, **dadurch gekennzeichnet, dass** sich die Vertiefungen (85) entlang einer Achse (A) gegenüberliegen, die in einer zur Messrichtung (M) parallelen Ebene liegt.

6. Vorrichtung nach einem der vorgehenden Ansprüche, **dadurch gekennzeichnet, dass** das Zusatzlager (89, 91, 101) einen Kugelring (101) umfasst, über den die Spindeleinheit (7) mittels eines Auflagerrings (89) auf einem der Maschinenbasis (1) zugeordneten Gegenring (91) aufliegt.

7. Vorrichtung nach einem der vorhergehenden Ansprüche, **dadurch gekennzeichnet, dass** die Halteraufhängung (49) zwei in der vorbestimmten Messrichtung (M) relativ zueinander im Wesentlichen transversal bewegliche und mindestens einer dazu senkrechten Richtung (N) im Wesentlichen steif miteinander verbundene Halterelemente (51, 53) umfasst, von denen eines relativ zur Spindeleinheit (7) und das andere relativ zur Maschinenbasis (1) festgelegt ist.

8. Vorrichtung nach Anspruch 7, **dadurch gekennzeichnet, dass** die Halterelemente (51, 53) im Abstand voneinander angeordnet und von wenigstens einem in Messrichtung im Wesentlichen biegewiderstandsfreien und in Abstandsrichtung im Wesentlichen biegesteifen Abstandhalter (55), insbesondere mehreren solcher Abstandhalter (55) aneinander gehalten sind.

9. Vorrichtung nach Anspruch 8, **dadurch gekennzeichnet, dass** die Abstandhalter (55) als Blattfedern ausgebildet sind, deren Hauptebene im Wesentlichen senkrecht zur Messrichtung verläuft.

10. Vorrichtung nach Anspruch 9, **dadurch gekennzeichnet, dass** die Blattfedern (55) an beiden Halterelementen (51, 53) um solche Drehachsen drehbar angelenkt sind, die im Wesentlichen parallel zur Messrichtung verlaufen.

11. Vorrichtung nach Anspruch 8, **dadurch gekennzeichnet, dass** die Abstandhalter (55) als an beiden Halterelementen (51, 53) gelenkig angelenkte Stäbe ausgebildet sind, deren Stabachse jeweils in Richtung des Abstandes der Halterelemente verläuft und deren Gelenkachse normal zur Messrichtung verläuft.

12. Vorrichtung nach einem der vorhergehenden Ansprüche 7 bis 11, **dadurch gekennzeichnet, dass** die Sensoranordnung wenigstens einen zwischen den beiden Halterelementen (51, 53) gehaltenen und durch die Relativbewegung der beiden Halterelemente relativ zueinander signalbeaufschlagten Sensor (61) aufweist.

13. Vorrichtung nach einem der Ansprüche 7 bis 12, **dadurch gekennzeichnet, dass** ein Zusatzlager (73, 75, 77) mindestens einen, vorzugsweise nur einen Wälzkörper (73) umfasst, der in der Halteraufhängung (49) zwischen den Halterelementen (51, 53) angeordnet ist, und über den sich das relativ zum Spindelelement (7) festgelegte Halterelement (53) an dem relativ zur Maschinenbasis (1) festgelegten Halterelement (51) in Richtung der Normalen (N) zur Messrichtung (M) abstützt, wobei der mindestens eine Wälzkörper (73) so angeordnet ist, dass die beiden Halterelemente (51, 53) im Betrieb über den Wälzkörper (73) in Messrichtung (M) gegeneinander abrollen können.

14. Vorrichtung nach Anspruch 13, **dadurch gekennzeichnet, dass** ein weiteres Zusatzlager in Form eines Gegenlagers (79) vorgesehen ist, das einem ersten Zusatzlager in der Halteraufhängung (49) am Umfang der Spindeleinheit (7) diametral gegenüberliegt, wobei das Gegenlager (79) mindestens einen weiteren Wälzkörper (73) umfasst, der die Spindeleinheit (7) im Wesentlichen nur in Richtung der Normalen (N) zur Messrichtung (M) abstützt.

15. Vorrichtung nach einem der Ansprüche 7 bis 12 in Verbindung mit Anspruch 6, **dadurch gekennzeichnet, dass** der Kugelring (101) nicht vollständig in sich geschlossen ist, sondern den Umfang des Spindelelements nur abschnittweise umgreift, und der Gegenring (91) auf seiner einen Seite einen vorzugsweise gabelförmigen Abschnitt (93) zur Befestigung an dem relativ zur Maschinenbasis (1) festgelegten Halterelement (51) aufweist und auf mindestens einer davon entfernten Seite einen Abschnitt, vorzugsweise in Form einer Lagerzunge (95), zur Befestigung an der Maschinenbasis (1) aufweist.

16. Vorrichtung nach einem der vorhergehenden Ansprüche in Verbindung mit Anspruch 12, **dadurch gekennzeichnet, dass** die Halterelemente (51, 53) paarweise aufeinander zu abstehende Vorsprünge (57, 59) haben, zwischen welchen ein Kraftsensor (61) angeordnet ist.

17. Halteraufhängung mit einer Ausgestaltung derart, dass mittels ihr eine Spindeleinheit (7) pendelnd an der Maschinenbasis (1) verankert werden kann, so dass die Spindeleinheit (7) durch die im Messbetrieb auftretenden Unwuchtkräfte in einer vorgegebenen Messrichtung (M) schwingen kann und eine Sensoranordnung (61) betätigen kann, die bei Rotation der Spindel (11) mindestens eine in Messrichtung (M) auftretende Unwuchtkenngröße erfasst, **dadurch gekennzeichnet, dass** die Halteraufhängung (49) ein Zusatzlager (73, 75)zum Abstützen der Spindeleinheit (7) umfasst, das ausschließlich Kräfte in Richtung einer Normalen (N) zur Messrichtung (M) übertragen kann.

## Claims

1. A device for measuring the rotational imbalance of a test object, comprising
a spindle unit (7) with a spindle (11), which is intended to hold the test object (17) and to let it rotate at a testing speed, and a holder suspension device (49) by means of which the spindle unit (7) is anchored to the machine base (1) in pendulum fashion such that the spindle unit (7) is able to oscillate in a predetermined measuring direction (M) due to the imbalance forces occurring during the measurement operation, and a sensor arrangement (61) that detects at least one imbalance parameter occurring in the measuring direction (M) during the rotation of the spindle (11), **characterised in that** the spindle unit (7) is supported by means of at least one auxiliary bearing (73, 75, 77, 79, 89, 91, 101) that is able to transmit only forces in the direction of a normal (N) to the measuring direction (M).

2. The device according to claim 1, **characterised in that** the auxiliary bearing (73, 75, 77) includes only a single rolling element (73).

3. The device according to claim 1, **characterised in that** the auxiliary bearing (73, 75, 77; 79) includes two individual rolling elements (73), which are substantially situated diametrically opposite each other with respect to the circumference of the spindle unit (7), or four individual rolling elements (73), which include an angle (W) of 80 to 100 degrees, respectively, between one another on the circumference of the spindle unit (7).

4. The device according to claim 2 or 3, **characterised in that** the at least one rolling element (73) is a ball, which is caught between one recess (85) on the side of a spindle unit (7) and another recess (85) on the side of the machine base (1) in such a way that the ball (73) is able to move freely in the measuring direction (M) during the imbalance-induced deflection without being lost.

5. The device according to claim 4, **characterised in that** the recesses (85) are situated opposite each other along an axis (A) that is situated in a plane parallel to the measuring direction (M).

6. The device according to any one of the preceding claims, **characterised in that** the auxiliary bearing (89, 91, 101) includes a ball ring (101) via which the spindle unit (7), by means of a support ring (89), rests on a counterpart ring (91) associated with the machine base (1).

7. The device according to any one of the preceding claims, **characterised in that** the holder suspension device (49) includes two holder elements (51, 53) that are movable relative to each other in the predetermined measuring direction (M) substantially transversely and are connected to each other in a substantially rigid manner in at least one direction (N) perpendicular thereto, one of which is fixed relative to the spindle unit (7) and the other of which is fixed relative to the machine base (1).

8. The device according to claim 7, **characterized in that** the holder elements (51, 53) are spaced apart from each other and are secured to each other by at least one spacer (55) that is substantially free of bending resistance in the measuring direction and is substantially rigid in the spacing direction, in particular a plurality of such spacers (55).

9. The device according to claim 8, **characterised in that** the spacers (55) are configured as leaf springs whose main plane extends substantially perpendicular to the measuring direction.

10. The device according to claim 9, **characterised in that** the leaf springs (55) are hinged to the two holder elements (51, 53) so as to be rotatable around such rotation axes that extend essentially parallel to the measuring direction.

11. The device according to claim 8, **characterised in that** the spacers (55) are configured as rods that are hinged to both holder elements (51, 53) in an articulated manner and whose rod axes respectively extend in the direction of the spacing of the holder elements and whose articulation axes respectively extend normal to the measuring direction.

12. The device according to any one of the preceding claims 7 to 11, **characterised in that** the sensor arrangement has at least one sensor (61) that is held between the two holder elements (51, 53) and to which signals are applied due to the relative movement of the two holder elements relative to each other.

13. The device according to any one of the claims 7 to 12, **characterised in that** an auxiliary bearing (73, 75, 77) includes at least one, preferably only one, rolling element (73), which is situated in the holder suspension device (49) between the holder elements (51, 53) and by means of which the holder element (53) fixed relative to the spindle element (7) rests against the holder element (51) fixed relative to the machine base (1) in the direction of the normal (N) to the measuring direction (M), wherein the at least one rolling element (73) is disposed so that the two holder elements (51, 53) are able to roll against each other in the measuring direction (M) via the rolling element (73) during operation.

14. The device according to claim 13, **characterised in that** another auxiliary bearing in the form of a counter-bearing (79) is provided, which is situated diametrically opposite a first auxiliary bearing in the holder suspension device (49) on the circumference of the spindle unit (7), wherein the counter-bearing (79) includes at least one additional rolling element (73), which supports the spindle unit (7) substantially only in the direction of the normal (N) to the measuring direction (M).

15. The device according to any one of the claims 7 to 12 in conjunction with claim 6, **characterised in that** the ball ring (101) is not completely closed, but instead encloses only some sections of the circumference of the spindle element, and the counterpart ring (91) comprises, on one side thereof, a preferably fork-shaped section (93) for attachment to the holder element (51) that is fixed relative to the machine base (1) and, on at least one side remote from this end, has a section, preferably in the form of a support tab (95), for attachment to the machine base (1).

16. The device according to any one of the preceding claims in conjunction with claim 12, **characterised in that** the holder elements (51, 53) have projections (57, 59) that extend toward each other in pairs, between which a force sensor (61) is disposed.

17. A holder suspension device having such a configuration that, by means of it, a spindle unit (7) can be anchored to the machine base (1) in pendulum fashion such that the spindle unit (7) is able to oscillate in a predetermined measuring direction (M) due to the imbalance forces occurring during the measurement operation and is able to actuate a sensor arrangement (61) that detects at least one imbalance parameter occurring in the measuring direction (M) during the rotation of the spindle (11), **characterised in that** the holder suspension device (49) comprises an auxiliary bearing (73, 75) for supporting the spindle unit (7) that is able to transmit only forces in the direction of a normal (N) to the measuring direction (M).

## Revendications

1. Dispositif pour mesurer le balourd de rotation d'une pièce à contrôler, comprenant
une unité à broche (7) avec une broche (11) qui est destinée à tenir la pièce à contrôler (17) et à la mettre en rotation à une vitesse de rotation de contrôle, et avec une suspension de maintien (49) au moyen de laquelle l'unité à broche (7) est ancrée de manière pendulaire sur la base (1) de la machine, de sorte que l'unité à broche (7) est capable d'osciller dans une direction de mesure prédéterminée (M) en raison des forces de balourd qui se produisent dans le fonctionnement en mesure, et avec un agencement à capteur (61) qui, lors d'une rotation de la broche (11), détecte au moins une grandeur caractéristique de balourd qui se produit dans la direction de mesure (M),
**caractérisé en ce que** l'unité à broche (7) est soutenue par au moins un palier supplémentaire (73, 75, 77, 79, 89, 91, 101), qui est capable de transmettre exclusivement des forces dans la direction d'une normale (N) à la direction de mesure (M).

2. Dispositif selon la revendication 1, **caractérisé en ce que** le palier supplémentaire (73, 75, 77) inclut seulement un unique corps de roulement.

3. Dispositif selon la revendication 1, **caractérisé en ce que** le palier supplémentaire (73, 75, 77 ; 79) inclut deux corps de roulement individuels (73) qui sont sensiblement diamétralement opposés par référence à la périphérie de l'unité à broche (7), ou bien quatre corps de roulement individuels (73) qui forment entre eux respectivement un angle (W) de 80 à 100° à la périphérie de l'unité à broche (7).

4. Dispositif selon la revendication 2 ou 3, **caractérisé en ce que** ledit au moins un corps de roulement (73) est une bille, qui est prisonnière entre un renfoncement (85) sur le côté de l'unité à broche (7) et un autre renfoncement (85) sur le côté de la base (1) de la machine de telle façon que la bille (73) est capable de se déplacer librement dans la direction de mesure, dans le cadre de la déviation provoquée par le balourd, sans être perdue.

5. Dispositif selon la revendication 4, **caractérisé en ce que** les renfoncements (85) sont opposés le long d'un axe (A) qui est dans un plan parallèle à la direction de mesure (M).

6. Dispositif selon l'une des revendications précédentes, **caractérisé en ce que** le palier supplémentaire (89, 91, 101) inclut une bague à billes, au moyen de laquelle l'unité à broche (7) repose, au moyen d'une bague d'appui (89), sur une bague antagoniste (91) associée à la base (1) de la machine.

7. Dispositif selon l'une des revendications précédentes, **caractérisé en ce que** la suspension de maintien (49) inclut deux éléments de maintien (51, 53) déplaçables sensiblement transversalement l'un par rapport à l'autre dans la direction de mesure prédéterminée (M), et au moins un élément de maintien (51, 53) relié sensiblement rigidement ensemble dans une direction (N) perpendiculaire, parmi lesquels un élément de maintien est immobilisé par rapport à l'unité à broche (7) et l'autre élément de maintien est immobilisé par rapport à la base (1) de la machine.

8. Dispositif selon la revendication 7, **caractérisé en ce que** les éléments de maintien (51, 53) sont agencés à distance l'un de l'autre et sont maintenus l'un contre l'autre par au moins un élément d'écartement (55) sensiblement dépourvu de résistance à la flexion dans la direction de mesure et sensiblement rigide à la flexion dans la direction d'écartement, et en particulier par plusieurs éléments d'écartement (55) de ce type.

9. Dispositif selon la revendication 8, **caractérisé en ce que** les éléments d'écartement (55) sont réalisés comme des ressorts à lame dont le plan principal s'étend sensiblement perpendiculairement à la direction de mesure.

10. Dispositif selon la revendication 9, **caractérisé en ce que** les ressorts à lame (55) sont articulés en rotation sur les deux éléments de maintien (51, 53) autour d'axes de rotation qui s'étendent sensiblement parallèlement à la direction de mesure.

11. Dispositif selon la revendication 8, **caractérisé en ce que** les éléments d'écartement (55) sont réalisés sous forme de barreaux articulés sur les deux éléments de maintien (51, 53), dont les axes s'étendent respectivement en direction de l'écartement des éléments de maintien, et dont l'axe d'articulation est perpendiculaire à la direction de mesure.

12. Dispositif selon l'une des revendications 7 à 11, **caractérisé en ce que** l'agencement de capteur comprend au moins un capteur (61) retenu entre les deux éléments de maintien (51, 53), et produisant un signal en raison du mouvement relatif des deux éléments de maintien l'un par rapport à l'autre.

13. Dispositif selon l'une des revendications 7 à 12, **caractérisé en ce qu'**un palier supplémentaire (73, 75, 77) inclut au moins un corps de roulement (73), et de préférence seulement un corps de roulement (73) qui est agencé dans la suspension de maintien (49) entre les éléments de maintien (51, 53), et via lequel l'élément de maintien (53) immobilisé par rapport à l'élément à broche (7) s'appuie sur l'élément de maintien (51) immobilisé par rapport à la base (1) de la machine, dans la direction de la perpendiculaire (N) à la direction de mesure (M), et dans lequel ledit au moins un corps de roulement (73) est agencé de telle façon que les deux éléments de maintien (51, 53) sont capables de rouler l'un par rapport à l'autre en direction de mesure en fonctionnement par l'intermédiaire des corps de roulement (73).

14. Dispositif selon la revendication 13, **caractérisé en ce qu'**il est prévu un autre palier supplémentaire sous la forme d'un palier antagoniste (79), qui est diamétralement à l'opposé d'un premier palier supplémentaire dans la suspension de maintien (49) à la périphérie de l'unité à broche (7), dans lequel le palier antagoniste (79) inclut au moins un autre corps de roulement (73) qui soutient l'unité à broche (7) sensiblement uniquement en direction de la perpendiculaire (N) à la direction de mesure (M).

15. Dispositif selon l'une des revendications 7 à 12, en dépendance de la revendication 6, **caractérisé en ce que** la bague à billes (101) n'est pas totalement refermée sur elle-même, mais enserre la périphérie de l'élément à broche uniquement par portions, et la bague antagoniste (91) comprend, sur un de ses côtés, une portion (93), de préférence en forme de fourche, pour la fixation sur l'élément de maintien (51) immobilisé par rapport à la base (1) de la machine, et comprend, sur au moins un côté éloigné de celui-ci, une portion, de préférence sous la forme d'une languette de montage (95), pour la fixation sur la base (1) de la machine.

16. Dispositif selon l'une des revendications précédentes, en dépendance de la revendication 12, **caractérisé en ce que** les éléments de maintien (51, 53) possède des saillies (57, 59) dressées par paires en direction l'une de l'autre, entre lesquelles est agencé un capteur de force (61).

17. Suspension de maintien, présentant une conception telle qu'au moyen de celle-ci une unité à broche (7) peut être ancrée sur la base (1) de la machine de telle façon que l'unité à broche (7) est capable d'osciller dans une direction de mesure prédéterminée (M) en raison des forces de balourd qui apparaissent lors du fonctionnement en mesure, et est capable d'actionner un agencement capteur (61) qui, lors d'une rotation de la broche (11), détecte au moins une grandeur caractéristique de balourd qui apparaît dans la direction de mesure (M), **caractérisée en ce que** la suspension de maintien (49) inclut un palier supplémentaire (73, 75) pour soutenir l'unité à broche (7), qui est capable de transmettre exclusivement des forces dans la direction d'une perpendiculaire (N) à la direction de mesure (M).
